# FASCICULE DE BREVET EUROPEEN

(11) **EP 0 611 542 B1**
(45) Date de publication et mention de la délivrance du brevet: **20.09.1995**
(21) Numéro de dépôt: 94420052.6
(22) Date de dépôt: 14.02.1994
(51) Int. Cl.: A47J 37/12

(54) **Appareil de chauffe pour la cuisson ou la friture d'aliments comportant des moyens de pilotage fixes sur une plaque support amovible**
Heizvorrichtung zum Kochen oder Fritieren von Nahrungsmitteln, mit auf einer abnehmbaren Platte montierten Regelelementen
Heating device for cooking or frying food, comprising controlling means mounted on a removable support plate

(30) Priorité: 15.02.1993 FR 9301962
(43) Date de publication de la demande: 24.08.1994
(73) Titulaire: SEB S.A., 69130 Ecully (FR)
(72) Inventeur: Dumoux, Philippe, F-21260 Selongey (FR); Federico, Dominique, F-21120 Is-Sur-Tille (FR); Thevenin, Jean-Marie, F-21610 Bourberain (FR)

(56) Documents cités:
- EP-A- 0 499 062
- DE-U- 9 013 848
- US-A- 3 159 344
- US-A- 3 904 852

## Description

La présente invention concerne un appareil de chauffe pour la cuisson ou la friture dans un fluide, tel qu'une friteuse par exemple, comportant une cuve de cuisson entourée par une jupe externe formant la façade de l'appareil, des moyens de chauffe et des moyens de pilotage du cycle de fonctionnement de l'appareil.

Les appareils de chauffe du type mentionné précédemment, et par exemple les friteuses électriques, comportent de manière classique une cuve de cuisson, par exemple métallique, entourée à distance par une jupe externe, généralement en polypropylène, formant la façade de l'appareil. Les moyens de chauffe sont également de manière classique constitués par au moins une résistance blindée disposée sous le fond de la cuve, et en relation d'échange thermique avec cette dernière. Les friteuses électriques connues à ce jour comportent également en tant que moyen de pilotage de leur cycle de fonctionnement, différents voyants et boutons de contrôle ou de réglage ainsi que des limiteurs thermiques de fonctionnement de la résistance blindée. Les limiteurs thermiques sont par exemple constitués par un thermostat associé ou non à un ou plusieurs fusibles, ledit thermostat étant réglable par l'intermédiaire d'un bouton disposé sur la façade de l'appareil. Le thermostat et le ou les fusibles associé(s) sont en général situés sur le fond de la cuve.

Les friteuses électriques conçues selon le principe de construction mentionné précédemment nécessitent en cas de dysfonctionnement du thermostat ou lorsque le fusible de sécurité a fondu un démontage important de l'appareil pour assurer le remplacement de la pièce défectueuse. Une telle opération est bien évidemment longue et fastidieuse et constitue un inconvénient lié à la conception même de tels appareils. Par ailleurs, le montage dans le corps de la friteuse de l'ensemble des câblages électriques liés aux limiteurs thermiques et aux divers moyens de pilotage du cycle de fonctionnement de l'appareil constitue également un inconvénient lié à la conception même des friteuses connues à ce jour. Il convient également de noter que le montage de telles friteuses nécessite de véhiculer l'ensemble de la friteuse sur les chaînes de montage, ce qui constitue un inconvénient sur le plan industriel.

Il est également connu, par l'intermédiaire du document US-A-3904852, d'agencer de manière amovible dans le bâti d'un système de cuisson des moyens de pilotage et en particulier un module d'ordinateur relié à une sonde disposée à l'intérieur de la cuve de cuisson. Une telle conception ne permet pas de contrôler de manière simple la montée en température de la cuve de cuisson.

L'objet de la présente invention vise en conséquence à remédier aux divers inconvénients énumérés précédemment et à proposer un nouvel appareil de chauffe dont le montage et l'accès aux différents moyens de pilotage du cycle de fonctionnement de l'appareil sont facilités à l'aide de moyens simples.

Un autre objet de l'invention vise à fournir un nouvel appareil de chauffe permettant un accès facilité aux différents moyens de pilotage du cycle de fonctionnement de l'appareil sans perturber le fonctionnement des éléments de régulation thermique, et ce tout en admettant des tolérances de fabrication dimensionnelles classiques.

Un autre objet de l'invention vise à fournir un nouvel appareil de chauffe permettant une simplification et une amélioration des opérations de montage des différents éléments le constituant.

Les objets assignés à l'invention sont atteints à l'aide d'un appareil de chauffe pour la cuisson ou la friture d'aliments dans un fluide, comportant une cuve de cuisson entourée par une jupe externe formant la façade de l'appareil, des moyens de chauffe, et des moyens de pilotage du cycle de fonctionnement de l'appareil dont au moins une partie desdits moyens de pilotage est fixée sur une plaque support destinée à être montée de manière amovible dans une découpe correspondante de la jupe externe pour constituer un élément de la façade de l'appareil caractérisé en ce que les moyens de pilotage comprennent des éléments de régulation thermique montés sur la plaque support de manière à être en échange thermique avec la cuve lorsque ladite plaque support est en place. D'autres caractéristiques préférentielles sont contenues dans les revendications dépendantes 2-14.

D'autres particularités et avantages de l'invention apparaitront et ressortiront plus en détail à la lecture de la description faite ci-après en référence aux dessins annexés, donnés à titres d'exemples illustratifs et non limitatifs, dans lesquels :
- La figure 1 montre selon une vue en coupe partielle l'intégration d'une plaque support conforme à l'invention dans la jupe externe d'une friteuse.
- La figure 2 montre selon une autre coupe longitudinale partielle une plaque support conforme à l'invention intégrée dans la façade d'une friteuse.
- La figure 3 montre selon une vue en coupe transversale l'intégration d'une plaque support conforme à l'invention dans la façade d'une friteuse.
- La figure 4 montre un détail de réalisation d'un bouton de commande conforme à l'invention.

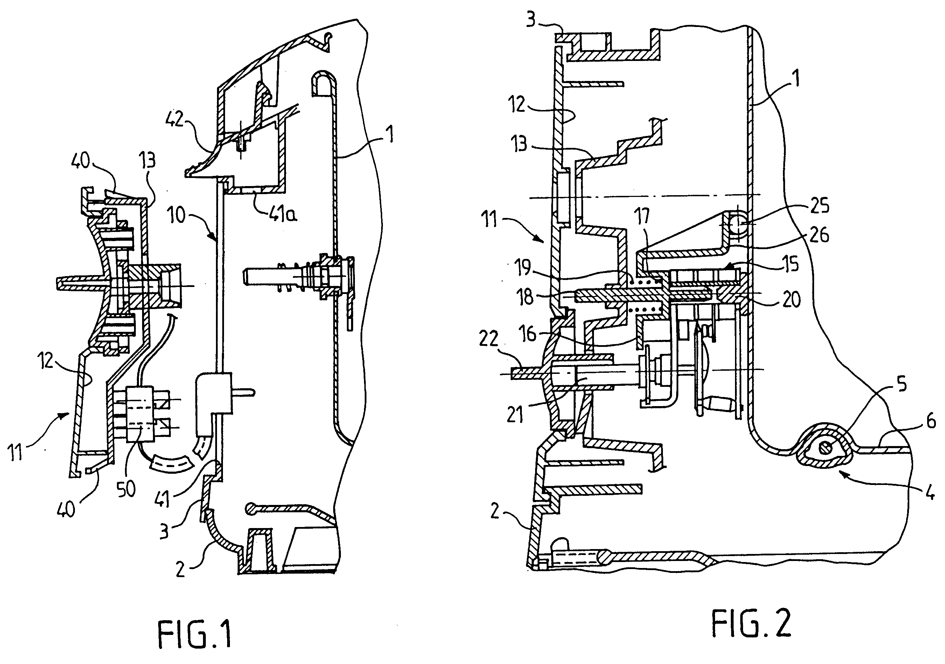

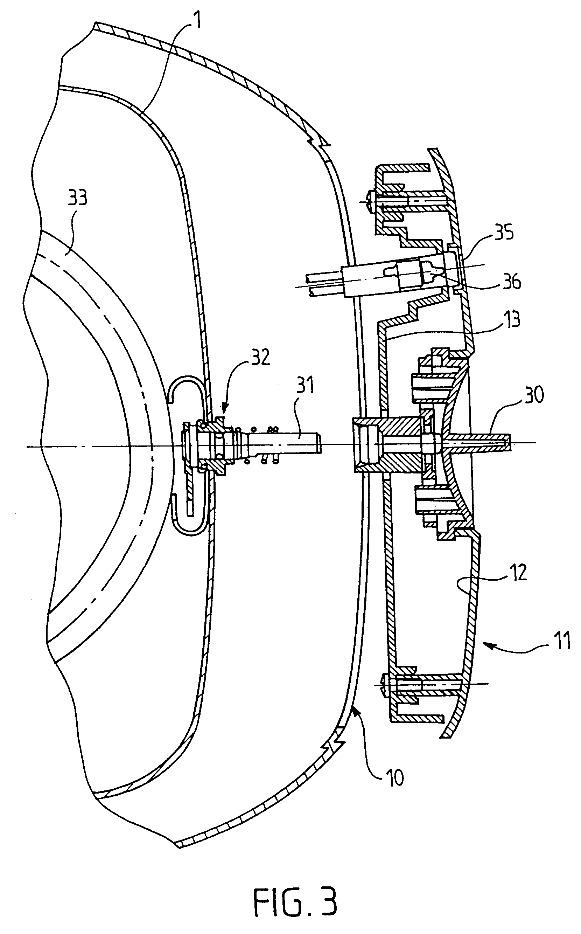

La figure 1 montre selon une vue en coupe partielle un appareil de chauffe conforme à l'invention tel qu'une friteuse électrique comportant une cuve 1 de cuisson, destinée à recevoir un fluide, en l'occurrence de l'huile permettant de réaliser la friture. La cuve 1 est montée par tous moyens appropriés dans un réceptacle formé par une embase 2 surmontée par une coque plastique, par exemple en polypropylène, formant la jupe externe 3 de la friteuse. La cuve 1 est fixée par tous moyens appropriés connus dans le réceptacle et est entourée à distance par la jupe externe 3. De manière classique, la friteuse montrée aux figures 1 à 3, comporte des moyens de chauffe 4 constitués par exemple d'une résistance blindée 5 solidaire du fond 6 de la cuve 1.

L'appareil de chauffe conforme à l'invention comporte dans sa façade constituée par la jupe externe 3, une découpe 10 par exemple sensiblement rectangulaire, débouchant dans l'espace entre la jupe externe 3 et la paroi de la cuve 1. La découpe 10 est destinée à recevoir une plaque support 11 de forme conjuguée correspondant à la forme de ladite découpe 10, de manière à constituer un élément de la façade de la friteuse. Avantageusement, la plaque support 11 est solidaire par sa face interne 12 d'une platine 13 recouvrant ladite face interne 12 sensiblement sur toute sa surface, de manière à constituer un ensemble assimilable à un boîtier. La platine 13 est fixée sur la plaque support 11 par tous moyens appropriés, et par exemple par un vissage.

La plaque support 11 est montée de manière amovible dans la découpe 10 et est destinée à supporter au moins une partie des moyens de pilotage nécessaires au cycle de fonctionnement de la friteuse. Sous le terme "moyens de pilotage" il convient d'entendre dans le cadre de l'invention, l'ensemble des moyens techniques nécessaires pour que la friteuse accomplisse son cycle complet de cuisson ou de friture qu'il s'agisse, du contrôle, de la commande et de la régulation de montée en température, qu'il s'agisse des organes de mise en marche ou d'arrêt, ou encore des organes de contrôle en général ou en particulier de la durée du cycle de fonctionnement, ou bien encore des organes de commande de la position du panier de friture ou de l'état de vieillissement du fluide de cuisson. Bien évidemment une telle liste de moyens techniques n'est pas limitative.

De manière préférentielle les moyens de pilotage fixés sur la plaque support 11 comprennent en tant qu'éléments de régulation thermique au moins un thermostat 15 (Figure 2) de type connu en soi, et par exemple du type à lames bi-métallique. Le thermostat 15 est solidaire par une extrémité d'un support 16 définissant un évidement 17, à l'intérieur duquel s'étend un plot de fixation 18 destiné à s'engager dans un orifice de la platine 13. Le thermostat 15 est fixé à demeure sur la platine 13 par l'intermédiaire de clips de fixation (non montrés aux figures), ou par tous autres moyens de fixation équivalents et est avantageusement monté élastiquement mobile sur la platine 13 selon l'axe du plot 18 s'étendant selon une direction sensiblement normale a la paroi de la cuve 1. Le montage élastique du thermostat 15 est avantageusement réalisé par l'interposition d'un ressort de compression 19, concentrique au plot 18 et interposé entre l'évidement 17 et la face de la platine 13 faisant face a la paroi de cuve 1. Le thermostat 15 comporte également, de préférence dans une zone opposée au plot de fixation 18, un pion 20 de contact sphérique, avantageusement en aluminium, destiné à assurer un contact thermique optimal entre la paroi de cuve 1 et le thermostat 15 remédiant ainsi aux diverses dispersions dimensionnelles de fabrication. Les dimensions du thermostat 15 ainsi que l'élasticité du ressort 19 sont telles qu'elles permettent d'assurer, lors de la mise en place de la plaque support 11 dans la découpe 10, un contact élastique optimal entre le pion 20 et la paroi de cuve 1, susceptible de rattraper tout jeu de fabrication. Le thermostat 15 est pourvu de manière classique d'une tige 21 de réglage de sensibilité, ladite tige étant accouplée au travers d'un perçage ménagé dans la platine 13, à un bouton de réglage 22 tourillonant sur la plaque support 11 et intégré dans la façade de cette dernière.

A titre de variante de réalisation il est bien évidemment envisageable de monter d'autres élements de régulation thermique sur la platine 13 ou sur la plaque support 11 de manière à être en relation d'échange thermique avec la cuve 1 lorsque la plaque 11 est en place dans la découpe 10. Ainsi, à titre de variante il est possible de monter, tel que cela est montré à la figure 2 par exemple, au moins un fusible 25 sur la platine 13. Le fusible 25 peut être monté par l'intermédiaire d'une patte 26 sur le support 16 du thermostat 15. Dans une autre variante de réalisation (non montrée aux figures) le fusible 25 peut être monté de manière indépendante directement sur la platine 13 par l'intermédiaire d'un corps de montage fixé sur ladite platine 13. Le fusible 25 peut également être implanté sur un corps de fixation issu du moulage de la platine 13. De préférence, quelque soit le type de montage envisagé, le fusible 25 est monté élastiquement mobile sur la platine 13 selon une direction sensiblement normale à la paroi de cuve 1 de manière à venir en contact thermique avec la cuve 1 lorsque la plaque support 11 est en place. Les éléments de régulation thermique sont donc montés par exemple au moins en partie sur la plaque support 11 par l'intermédiaire de la platine 13.

Les organes de commande, de réglage et de contrôle du cycle de fonctionnement de la friteuse peuvent également être avantageusement intégrés dans la plaque support 11 en façade de cette dernière, de manière à pouvoir être directement actionnés par l'utilisateur. A cette fin la plaque support 11 comprend un bouton de commande 30 solidaire par l'intermédiaire d'un perçage ménagé dans la platine 13, d'un axe de commande 31 d'un système 32 de monte et baisse d'un panier 33 inséré dans la cuve 1. La plaque support 11 peut également comporter sur sa face externe une ouverture 35 pour l'emplacement d'un voyant lumineux 36 servant d'organe de contrôle de fonctionnement de la friteuse. Accessoirement la plaque support 11 peut également comporter un interrupteur marche-arrêt de l'appareil (non représenté aux figures). La plaque support 11 et le boîtier comportant l'ensemble des moyens de pilotage est destiné à être intégré de façon amovible dans la découpe 10 de manière à pourvoir être monté et démonté aisément. A cet effet le système de fixation peut comporter une série de languettes de retenues 40, de préférence solidaires de la platine 13 (Figures 1 à 3) destinées à coopérer avec des logements 41 ménagés dans la jupe externe 3. Pour faciliter l'extraction de la plaque support 11 lorsque les languettes 40 sont en place dans les logements 41, il est envisageable de réaliser des logements 41a dans un verrou d'accès 42 monté mobile sur la jupe externe 3, permettant ainsi après son ouverture d'accéder au moins à un côté de la plaquette support 11 et d'extraire ainsi cette dernière facilement. A titre de variante, il est également possible d'assurer l'amovibilité de la plaque support 11 en montant cette dernière en rotation sur un flanc de la découpe 10 à l'aide d'une charnière (non représentée aux figures).

La platine 13 comporte également des ergots pour la fixation d'un domino 50 de connexion électrique et est pourvue d'une série de moyens pincements destinés à maintenir fermement en place les fils de connexion électrique.

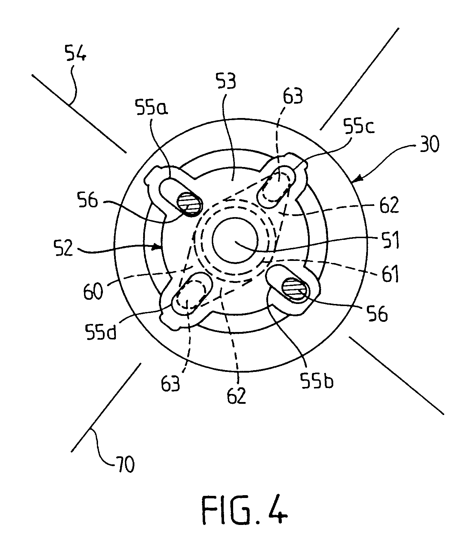

La figure 4 montre un détail de réalisation particulièrement avantageux, permettant de s'affranchir des différents jeux de fabrication et de montage pour relier le bouton de commande 30 à l'axe 31 du système 32 de monte et baisse du panier 30. Le rattrapage d'éventuels jeux d'alignement entre l'axe 31 et l'axe d'entraînement en rotation 51 du bouton de commande 30, est obtenu à l'aide d'un système de compensation d'alignement 52. Ce dernier comporte un disque d'ajustement 53, monté mobile avec une course limitée sur le bouton de commande 30 selon le premier axe 54 d'ajustement normal à l'axe d'entraînement en rotation 51. Le disque d'ajustement 53 comprend deux oeillets 55a et 55b, en forme de fente s'étendant selon le premier axe 54 et formant une première paire d'oeillets diamétralement opposées par rapport au centre du disque. Le disque d'ajustement 53 est monté mobile sur le bouton de commande 30 au moyen des oeillets 55a et 55b qui viennent engager deux plots 56 solidaires dudit bouton 30, de dimension inférieure à la surface des fentes des oeillets 55a et 55b. Grâce à ce montage, le disque d'ajustement est mobile selon les deux directions définies par le premier axe 54 d'ajustement. Le système de compensation d'alignement 52 comprend également un manchon 60 de liaison entre le bouton 30 et l'axe 31 de commande du système 32 de monte et baisse. Le manchon 60 est une pièce rapportée sur le disque d'ajustement 53 et comporte une extrémité 61 destinée à être enfilée sur l'axe de commande 31 et deux bras latéraux 62 pourvus chacun d'un ergot 63 à l'autre extrémité.

Les ergots 63 sont destinés à venir s'insérer, avec possibilité de coulissement dans des oeillets 55c, 55d en forme de fente et ménagés en position diamétralement opposée dans l'épaisseur du disque d'ajustement 53. La seconde paire d'oeillets 55c, 55d ainsi réalisée s'étend selon un second axe d'ajustement 70, normal au premier axe 54 d'ajustement. Les quatre oeillets 55a, 55b, 55c, 55d sont ainsi décalés de 90°. Le manchon 60 est en conséquence monté mobile, avec une course limitée selon les deux directions définies, par le second axe 70 d'ajustement. La combinaison des deux axes d'ajustement 54 et 70, permet d'obtenir un jeu compensateur d'alignement du manchon 60 dans toutes les directions du plan d'extension du disque d'ajustement 53 et circonscrit à un cercle. Il est ainsi possible de rattraper toute différence d'alignement entre l'axe du bouton 30 et l'axe 31 du système 32 de monte et baisse.

La plaque support 11 ou de manière préférentielle le boîtier de pilotage formé par l'ensemble de la plaque support 11 et de la platine 13 permet ainsi de constituer un sous-ensemble sur lequel le montage des principaux moyens de pilotage d'une friteuse est simplifié. De la même manière, l'accès à des fins de démontage,de réparation ou de contrôle, des moyens de pilotage est facilité, puisqu'il n'est alors plus nécessaire de manipuler ou de démonter l'ensemble de la friteuse pour avoir accès à des éléments essentiels tels que le thermostat ou l'ensemble des câbles électriques. Il suffit en effet d'extraire totalement ou partiellement la plaque support 11 de la découpe 10 pour pouvoir immédiatement accéder et éventuellement changer les moyens de pilotage. Un tel objectif est atteint sans modification sensible de l'esthétique de l'appareil puisque la plaque support 11 est parfaitement intégrée dans la façade de l'appareil.

## Revendications

1. Appareil de chauffe pour la cuisson ou la friture d'aliments dans un fluide, comportant une cuve de cuisson (1) entourée par une jupe externe (3) formant la façade de l'appareil, des moyens de chauffe (4, 5), et des moyens de pilotage (15, 25) du cycle de fonctionnement de l'appareil dont au moins une partie desdits moyens de pilotage (15, 25) est fixée sur une plaque support (11) destinée à être montée de manière amovible dans une découpe (10) correspondante de la jupe externe (3) pour constituer un élément de la façade de l'appareil caractérisé en ce que les moyens de pilotage (15, 25) comprennent des éléments de régulation thermique montés sur la plaque support (11) de manière à être en échange thermique avec la cuve (1) lorsque ladite plaque support (11) est en place.

2. Appareil selon la revendication 1 caractérisé en ce que les éléments de régulation thermique sont montés élastiquement mobiles sur la plaque support (11) selon une direction sensiblement normale aux parois de la cuve (1) de façon à venir en contact avec la cuve (1) lorsque ladite plaque support (11) est en place.

3. Appareil selon l'une des revendications 1 ou 2 caractérisé en ce que la plaque support (11) est solidaire par sa face interne opposée à la cuve (1) d'une platine (13) de manière à constituer un boîtier de pilotage amovible.

4. Appareil selon l'une des revendications 1 à 3 caractérisé en ce que la plaque support (11) ou le boîtier est pourvu de languettes (40) de retenues, de préférence solidaires de la platine (13), destinées à coopérer avec des logements (41, 41a) ménagés dans la jupe externe (3) pour assurer le montage amovible de la plaque support (11) ou du boîtier et son extraction.

5. Appareil selon l'une des revendications 1 à 4 caractérisé en ce que les éléments de régulation thermique sont constitués d'un thermostat (15).

6. Appareil selon l'une des revendication 5 caractérisé en ce que le thermostat (15) comporte à son extrémité un pion (20) de contact thermique, de préférence en aluminium.

7. Appareil selon l'une des revendications 1 à 6 caractérisé en ce que les éléments de régulation thermique comportent en outre un fusible (25) de préférence monté élastiquement mobile sur la platine (13) selon une direction sensiblement normale à la paroi de cuve (1), de manière à venir en contact thermique avec la cuve (1) lorsque la plaque support (11) est en place.

8. Appareil selon l'une des revendications 1 à 7 caractérisé en ce que les moyens de pilotage fixés sur la plaque support (11) comprennent les organes de commande, de réglage et de contrôle du cycle de fonctionnement, lesdits organes étant intégrés et actionnables par l'utilisateur à partir de la face externe de ladite plaque.

9. Appareil selon la revendication 8 caractérisé en ce que les organes de commande comprennent un bouton de commande (30) de la position du panier (33) inséré dans la cuve (1).

10. Appareil selon la revendication 9 caractérisé en ce que le bouton de commande (30) est pourvu d'un système de compensation d'alignement entre l'axe d'entrainement en rotation (51) du bouton (30) et l'axe de commande (31) de monte et baisse du panier (33).

11. Appareil selon la revendication 10 caractérisé en ce que le système de compensation d'alignement comporte un disque d'ajustement (53) monté mobile avec une course limitée sur le bouton de commande (30) selon un premier axe d'ajustement (54) normal à l'axe d'entrainement en rotation (51) dudit bouton, et un manchon de liaison (60) entre le bouton (30) et l'axe de commande (31) du panier (33), ledit manchon (60) étant monté mobile avec une course limitée sur le disque d'ajustement (53) selon un second axe d'ajustement (70) normal au premier axe d'ajustement (54).

12. Appareil selon la revendication 11 caractérisé en ce que le disque d'ajustement (53) comporte une première paire d'oeillets (55a, 55b) diamétralement opposés en forme de fente pour le montage mobile du disque (53) sur deux plots (56) du bouton de commande (30) et une seconde paire d'oeillets (55c, 55d) diamétralement opposés selon le second axe d'ajustement (70), en forme de fente, dans lesquels sont montés mobile deux ergots (63) solidaire du manchon de liaison (60).

13. Appareil selon l'une des revendications 8 à 12 caractérisé en ce que les organes de réglage comprennent un bouton de réglage (22) du thermostat (15), et les organes de contrôle comprennent un voyant de marche (36), et de préférence une minuterie et un interrupteur marche-arrêt.

14. Appareil selon l'une des revendications 1 à 13 caractérisé en ce qu'il est constitué par une friteuse.

## Claims

1. A heating appliance for cooking or frying food in a liquid, the appliance comprising a cooking vessel (1) surrounded by an outer skirt (3) forming the outside wall thereof, heating means (4, 5), and control means (15, 25) for controlling its operating cycle, with at least a portion of said control means (15, 25) being fixed on a support panel (11) designed to be removably mounted in a corresponding cutout (10) in the outer skirt (3) to constitute a portion of the outside wall of the appliance, the appliance being characterized in that the control means (15, 25) comprise temperature regulation components mounted on the support panel (11) in such a manner as to be in heat-exchange relationship with the vessel (1) when said support panel (11) is in position.

2. An appliance according to claim 1, characterized in that the temperature regulation components are mounted to be resiliently movable on the support panel (11) in a direction that is substantially normal to the walls of the vessel (1) so as to come into contact with the vessel (1) when said support panel (11) is in position.

3. An appliance according to claim 1 or 2, characterized in that the support panel (11) is secured via its inside face facing the vessel (1) to a backplate (13) in such a manner as to constitute a removable control housing.

4. An appliance according to any one of claims 1 to 3, characterized in that the support panel (11) or the housing is provided with retaining tongues (40), preferably secured to the backplate (13), designed to cooperate with openings (41, 41a) formed in the outer skirt (3) to provide removable mounting for the support panel (11) or the housing, and to enable it to be extracted.

5. An appliance according to any one of claims 1 to 4, characterized in that the temperature regulation components are constituted by a thermostat (15).

6. An appliance according to claim 5, characterized in that the thermostat (15) includes a thermal contact piece (20) which piece is preferably made of aluminium.

7. An appliance according to any one of claims 1 to 6, characterized in that the temperature regulation elements further include a fuse (25) which is preferably mounted in resiliently movable manner on the backplate (13) to move in a direction that is substantially normal to the wall of the vessel (1), thereby enabling it to come into thermal contact with the vessel (1) when the support panel (11) is in position.

8. An appliance according to any one of claims 1 to 7, characterized in that the control means fixed on the support panel (11) include members for controlling, adjusting, and monitoring the operating cycle thereof, said members being integrated and actuatable by the user from the outside face of said support panel.

9. An appliance according to claim 8, characterized in that the control members comprise a knob (30) for controlling the position of the basket (33) inserted in the vessel (1).

10. An appliance according to claim 9, characterized in that the control knob (30) is provided with a system for compensating alignment between the rotary drive axis (51) of the knob (30) and the shaft (31) for controlling raising and lowering of the basket (33).

11. An appliance according to claim 10, characterized in that the alignment compensation system includes an adjustment disk (53) mounted to move over a restricted stroke relative to the control knob (30) along a first adjustment axis (54) normal to the rotary drive axis (51) of said knob, and a coupling sleeve (60) between the knob (30) and the control shaft (31) for the basket (33), said sleeve (60) being movably mounted relative to the adjustment disk (53) to move over a restricted stroke along a second adjustment axis (70) normal to the first adjustment axis (54).

12. An appliance according to claim 11, characterized in that the adjustment disk (53) includes a first pair of diametrically opposite slot-shaped openings (55a, 55b) for mounting the disk (53) movably on two pins (56) on the control knob (30), and a second pair of diametrically opposite slot-shaped openings (55c, 55d) on the second adjustment axis (70) in which two lugs (63) secured to the coupling (60) are movably received.

13. An appliance according to any one of claims 8 to 12, characterized in that the adjustment members comprise a knob (22) for adjusting the thermostat (15) and monitoring members including an on/off indicator light (36) and preferably a timer and an on/off switch.

14. An appliance according to any one of claims 1 to 13, characterized in that it is constituted by a deep fryer.

## Patentansprüche

1. Heizapparat zum Kochen oder Backen in Flüssigkeit von Nahrungsmitteln, mit einem von einem die Außenwandung des Apparats bildenden Außenmantel (3) umgebenen Kochgefäß (1), Heizmitteln (4), (5) und Steuersmitteln (15), (25) zur Steuerung des Arbeitszyklus des Apparats, wobei mindestens ein Teil der Steuermittel (15), (25) auf einer in einen entsprechenden Ausschnitt (10) des Außenmantels (3) lösbar montierten, ein Teilstück der Außenwandung bildenden Trägerplatte (11) befestigt ist, dadurch gekennzeichnet, daß die Steuermittel (15), (25) auf die Trägerplatte (11) in der Weise montierte Temperaturregelungselemente umfassen, daß bei eingesetzter Trägerplatte (11) zwischen den Temperaturregelungselementen und dem Kochgefäß (1) ein Wärmeaustausch stattfindet.

2. Apparat nach Anspruch 1, dadurch gekennzeichnet, daß die Temperaturregelungselemente auf der Trägerplatte (11) elastisch beweglich in zur Wandung des Gefäßes (1) annähernd senkrechter Richtung befestigt sind, so daß sie bei eingesetzter Trägerplatte (11) mit dem Gefäß (1) in Kontakt stehen.

3. Apparat nach einem der Ansprüche 1 oder 2, dadurch gekennzeichnet, daß die Trägerplatte (11) über ihre dem Gefäß (1) gegenüberliegende Innenseite mit einer Halteplatte (13) unter Bildung eines abnehmbaren Gehäuses verbunden ist.

4. Apparat nach einem der Ansprüche 1 bis 3, dadurch gekennzeichnet, daß die Trägerplatte oder das Gehäuse mit vorzugsweise an der Halteplatte (13) angeschlossenen Haltezungen (40) versehen ist, welche zur Gewährleistung der lösbaren Befestigung und des Herausnehmens der Trägerplatte (11) oder des Gehäuses mit Ausnehmungen (41), (41a) im Außenmantel (3) zusammenwirken.

5. Apparat nach einem der Ansprüche 1 bis 4, dadurch gekennzeichnet, daß die Temperaturregelungselemente durch einen Thermostat (15) gebildet werden.

6. Apparat nach Anspruch 5, dadurch gekennzeichnet, daß der Thermostat (15) an seinem Ende ein Thermokontaktstück (20), vorzugsweise aus Aluminium, aufweist.

7. Apparat nach einem der Ansprüche 1 bis 6, dadurch gekennzeichnet, daß die Temperaturregelungselemente zusätzlich eine Sicherung (25) umfassen, welche vorzugsweise elastisch beweglich auf die Halteplatte (13) in zur Außenwandung des Gefäßes (1) annähernd senkrechter Ausrichtung montiert ist, so daß bei eingesetzter Trägerplatte (11) zwischen den Temperaturregelungselementen und dem Gefäß (1) der thermische Kontakt hergestellt ist.

8. Apparat nach einem der Ansprüche 1 bis 7, dadurch gekennzeichnet, daß die auf der Trägerplatte (11) befestigten Steuerungsmittel die für den Arbeitszyklus notwendigen Antriebs-, Einstell- und Kontrollorgane umfaßen, wobei diese Organe eingebaut sind und vom Benutzer von der Außenseite der Trägerplatte her betätigt werden können.

9. Apparat nach Anspruch 8, dadurch gekennzeichnet, daß die Antriebsorgane einen Betätigungsknopf (30) zur Einstellung der Lage des im Gefäß (1) eingesetzten Korbs (33) umfassen.

10. Apparat nach Anspruch 9, dadurch gekennzeichnet, daß der Betätigungsknopf (30) mit einem Ausgleichsystem der gegenseitgen Ausrichtung der Antriebsachse der Drehbewegung des Knopfs (30) und der Antriebsachse der Hebe- und Senkbewegung des Korbs (33) umfaßt.

11. Apparat nach Anspruch 10, dadurch gekennzeichnet, daß das Ausgleichsystem der Achsenausrichtung eine über eine vorbestimmte Weglänge bewegliche, gemäß einer ersten zur Drehachse (51) des Knopfs (30) senkrecht gerichteten Einstellachse (54) auf dem Betätigungsknopf (30) montierte Einstellscheibe (53) umfaßt, sowie einen Verbindungsstutzen (60) zur Verbindung des Betätigungsknopfs (30) mit der Antriebsachse (31) des Korbs (33), wobei der Verbindungsstutzen über eine vorbestimmte Weglänge beweglich gemäß einer zweiten zur Einstellachse (54) senkrechten Einstellachse (70) auf die Einstellscheibe (53) montiert ist.

12. Apparat nach Anspruch 11, dadurch gekennzeichnet, daß die Einstellscheibe (53) ein erstes Paar von einander genau gegenüberliegend angeordneten schlitzförmigen Ösen (55a), (55b) zur lösbaren Befestigung der Einstellscheibe (53) auf zwei Stiften (56) des Betätigungsknopfs (30) umfaßt, sowie ein zweites Paar von einander zur Einstellachse (70) genau gegenüberliegend angeordneten schlitzförmigen Ösen (55c), (55d), in welche zwei mit dem Verbindungsstutzen (60) fest verbundene Nocken (63) beweglich montiert sind.

13. Apparat nach einem der Ansprüche 8 bis 12, dadurch gekennzeichnet, daß die Einstellorgane einen Einstellknopf (22) für den Thermostat (15) und die Kontrollorgane einen Betriebsanzeiger (36), sowie vorzugsweise eine Schaltuhr und einen Ein- und Ausschalter umfassen.

14. Apparat nach einem der Ansprüche 1 bis 13, dadurch gekennzeichnet, daß er durch eine Friteuse gebildet wird.
